# EUROPÄISCHE PATENTSCHRIFT

(11) **EP 0 932 802 B1**
(45) Veröffentlichungstag und Bekanntmachung des Hinweises auf die Patenterteilung: **12.07.2000**
(21) Anmeldenummer: 97942869.5
(22) Anmeldetag: 21.08.1997
(51) Int. Cl.: F24J 2/34

(54) **VORRICHTUNG ZUR WARMWASSERERZEUGUNG MITTELS SOLARENERGIE**
DEVICE FOR PRODUCING HOT WATER BY MEANS OF SOLAR ENERGY
DISPOSITIF DE PRODUCTION D'EAU CHAUDE AU MOYEN D'ENERGIE SOLAIRE

(30) Priorität: 03.09.1996 DE 19635653
(43) Veröffentlichungstag der Anmeldung: 04.08.1999
(73) Patentinhaber: Ecotec Consulting GmbH, 47800 Krefeld (DE)
(72) Erfinder: KRÄMER, Thomas, D-74740 Adelsheim (DE)
(74) Vertreter: Dabringhaus, Walter, Dipl.-Ing.
(86) Internationale Anmeldenummer: EP9704556
(87) Internationale Veröffentlichungsnummer: WO9810230

(56) Entgegenhaltungen:
- EP-A- 0 289 438
- EP-A- 0 574 954
- EP-A- 0 696 713
- CH-A- 675 470
- FR-A- 2 476 283
- FR-A- 2 497 562
- FR-A- 2 528 955

## Beschreibung

Die Erfindung richtet sich auf eine Vorrichtung zur Warmwassererzeugung mittels Solarenergie mit einem Warmwasserspeicher in einem Gehäuse und einem querschnittlich etwa dreieckigen Absorber bzw. Kollektor zur Erwärmung eines Wärmeübertragungsmediums in einem Primärkreis, welches über einen Sekundärkreis im Wärmetausch mit dem im Wärmespeicher zu erwärmenden Brauchwasser steht, wobei der Warmwasserspeicher von einer Reihe von kaminartigen, vom Wärmeübertragungsmedium durchströmbaren Durchtrittsrohren durchsetzt ist, die als Schwerkraftkamine in Schwerkraftrichtung einstellbar sind und wobei diese Schwerkraftkamine und Montageflanschbereiche aus einem festen Material, wie Kupfer, bestehen.

Eine solche Vorrichtung ist beispielsweise aus der DE-44 28 251-A bzw. der EP-0 696 713-A1 bekannt. Bei dieser bekannten Vorrichtung ist ein Warmwassertank in einem Isolierbehälter vorgesehen, wobei zwischen Warmwassertank und Isolierbehälter und durch die den Warmwassertank durchsetzenden kaminartigen Rohre ein Wärmeübertragungsmedium strömt, welches von der Sonnenenergie erwärmt wird und das Brauchwasser im Warmwassertank erhitzen soll. Die Umwälzung erfolgt dort über die Schwerkraft, d.h. Umwälzpumpen sind nicht notwendig.

Weist die bekannte Lösung schon eine Fülle von Vorteilen auf, so gibt es Situationen, in denen Verbesserungen wünschenswert sind, u.a. die Flexibilität der Anpassung an unterschiedliche Einbausituationen, den Ein- und Ausbau des Wassertankes und die Druckverhältnisse im System.

Zum Stand der Technik sei noch auf die DE-43 25 887-A1, die großflächige Folienspeicher-Kollektorsysteme zeigt, verwiesen, auf die eine Solaranlage wiedergebende DE-41 17 651-A1, das DE-77 15 639-U1, das einen Solarflachkollektor zeigt, und die ein Warmwasserheizsystem älterer Bauart zeigende US-2 695 753, der beispielsweise Druckausgleichgefäße zu entnehmen sind.

Zum weiteren Stand der Technik gehört ein solarer Warmwasserbereiter mit integriertem Speicher nach der EP-0 574 954-A2 sowie der Sonnenkollektor nach der CH-675 470-A5, der EP-0 289 438-A1 oder den französischen Anmeldungen 2 476 283, 2 497 562 oder 2 528 955, die unterschiedliche Lösungen von solaren Warmwasseraufbereitern zeigen.

Aufgabe der Erfindung ist daher die Schaffung einer Lösung, mit der eine größere Anpassungsfähigkeit an unterschiedliche Einbausituationen erreichbar ist.

Mit einer Vorrichtung der eingangs bezeichneten Art wird diese Aufgabe gemäß der Erfindung dadurch gelöst, daß die sonstigen Warmwasserreservoirwände aus einem flexiblen Material, wie Gummi oder Kunststoff, gebildet sind und daß der Absorber bzw. Kollektor, das Isoliergehäuse sowie der darin untergebrachte Wärmespeicher als getrennte, miteinander verbindbare Module ausgebildet sind.

Durch die Modulbauweise ist es möglich, Absorber bzw. Kollektoren in unterschiedlichen Bauarten vorzusehen, beispielsweise mit einer Naturumlaufführung des zu erhitzenden Mediums oder einer Zwangsführung mit unterschiedlichen Arten der Absorberplatten, die den Erhitzer abdecken u. dgl. Auch kann der Wärmespeicher bzw. das entsprechende Gehäuse unterschiedlich gestaltet sein, im Gehäuse kann ein Festreservoir, wie im Stand der Technik vorbeschrieben, untergebracht sein oder ein weiter unten beschriebener elastischer Behälter. Auch läßt die Modulbauweise ein schnelles Reagieren auf evtl. Systemfehler zu, hier kann dann ggf. ein Einzelmodul so lange ausgetauscht werden, bis eine Störung im Modul beseitigt ist u. dgl.

Darüber hinaus hat ein derartig ausgebildeter, in großen Bereichen mit einer verformbaren elastischen Wand versehener Wärmespeicher eine Fülle von Vorteilen gegenüber starrer Ausbildung. So besteht ein besonderer Vorteil darin, daß über die Flansche im Isoliergehäuse der Wärmespeicher ein- und ausgebaut werden kann, ohne daß es des Öffnens des Isoliergehäuses bedarf, da ein elastischer Tank so zusammengelegt werden kann, daß er durch die Flanschöffnungen in das Isoliergehäuse eingeschoben und später über die Flanschringe befestigt werden kann.

Ein weiterer wesentlicher Vorteil besteht insbesondere darin, daß zunächst das Volumen des Primärkreises des Wärmeübertragungsmediums genau definiert ist. Erfolgt nun durch Erwärmung des Wärmeübertragungsmediums eine Volumenausdehnung dieses Mediums, kommt es im Primärkreis zu keiner Druckerhöhung, da diese über die flexiblen Wände des Wärmespeichers gegenüber dem Primärkreis ausgeglichen wird, so daß praktisch gleiche Druckverhältnisse bei jedem Betriebszustand zwischen Primärkreis und Sekundärkreis herrschen.

In Ausgestaltung ist vorgesehen, daß das den Wärmespeicher umgebende Isoliergehäuse mit bei beidseitigen Flanschringen zur Befestigung des Warmwasserspeichers in der gemäß Einbaulage jeweils gewünschten Position versehen ist.

Um ggf. steuernd bzw. überwachend eingreifen zu können, sieht die Erfindung in weiterer Ausgestaltung vor, daß sich insbesondere im Sekundärkreis ein Sicherheitsventil oder ein Ausgleichgefäß oder beides befindet.

Die wechselnden Drücke im System nutzt die Erfindung dazu aus, daß natürlich entstandener Überdruck, z.B. durch Erwärmen der Flüssigkeiten und deren Ausdehnung, in einem Ausgleichbehälter abgespeichert und/oder abgekoppelt wird und zu Sekundärzwecken genutzt wird, wie zum Betrieb einer Pumpe, zur Bildung von Preßluft, zur Bildung von einem Hydrauliküberdruck od. dgl. Dazu ist erfindungsgemäß in Ausgestaltung vorgesehen, daß zur Gewinnung von Überdruck im System ein Druckausgleichbehälter mit einer Abnahme des Druckes zu Sekundärzwecken vorgesehen ist.

Nach der Erfindung ist auch eine Druckerhöhungseinrichtung für den Sekundärkreis zur Zurverfügungstellung von Kalt- und Warmwasser unter gleichen Druckbedingungen vorgesehen.

Ein besonderer Vorteil besteht somit darin, daß ein solches Druckänderungen ausnutzendes System dazu eingesetzt werden kann, um für eine Druckerhöhung in dem üblicherweise drucklos betriebenen Versorgungssystem für Kalt- und Warmwasser u. dgl. zu sorgen, d.h. der Nutzer einer solchen Anlage verfügt bei allen Betriebszuständen über Wasser gleichen Drucks unabhängig davon, ob es sich um Kaltwasserentnahme oder Warmwasserentnahme handelt.

Die Erfindung sieht auch vor, daß im Primärkreis ein schwerkraftgeregeltes Schließorgan zur Verhinderung unbeabsichtigter Abkühlung, z.B. während des Nachtbetriebes, vorgesehen ist. Ein solches schwerkraftgeregeltes Schließorgan kann beispielsweise im Naturumlauf aus einer Kugel aus nicht wärmeleitfähigem Material in einem Kugelkäfig bestehen oder aus einer vergleichsweisen Gestaltung, die ausschließlich auf dichte Unterschiede der im Primärkreis eingesetzten Flüssigkeit reagiert, d.h. die Abkühlung des Wärmeübertragungsmediums zum Schließen des Kreislaufes nutzt, so daß beispielsweise bei Nacht verhindert wird, daß durch den Naturkreislauf nach und nach die gesamte Systemflüssigkeit abgekühlt wird unabhängig davon, ob es sich um Primär- oder Sekundärkreislauf handelt, die über Wärmekopplung miteinander verbunden sind.

Weitere Ausgestaltungen der Erfindung ergeben sich aus den Unteransprüchen 8 bis 13. So sieht die Erfindung auch eine Reihe von Regelungsorganen vor. Dabei ist es besonders zweckmäßig, ein auf Durchfluß und Druck im Kreislauf wirkendes Regelorgan vorzusehen, um beispielsweise eine wärmbare Nutztemperatur einzustellen mit kaltseitiger und/oder warmseitiger Verwendung zwischen dem Absorber und dem Wärmespeicher.

Eine andere Regelungsmöglichkeit besteht darin, eine bestimmte Minimaltemperatur zu steuern oder eine bestimmte Maximaltemperatur, wobei die entsprechenden Sensoren zweckmäßig im Warmwasserspeicher installiert sind.

Auch ist ein druckunabhängiger thermischer Brauchwassermischer erfindungsgemäß vorgesehen, der z.B. als Verbrühungsschutz eingesetzt werden kann, um etwa beim Duschen sicherzustellen, daß z.B. in der Mittagszeit im Wärmetauscher herrschende, sehr hohe Wassertemperaturen nicht zum Endverbraucher gelangen, sondern eine automatische, entsprechende Kaltwasserzumischung erfolgt. Der Vorteil der vorliegenden Erfindung besteht darin, daß ein solcher Brauchwassermischer für Niederdruckanlagen eingesetzt werden kann, da er druckunabhängig ist, was mit bekannten thermischen Brauchwassermischungen in der Regel nicht möglich wäre.

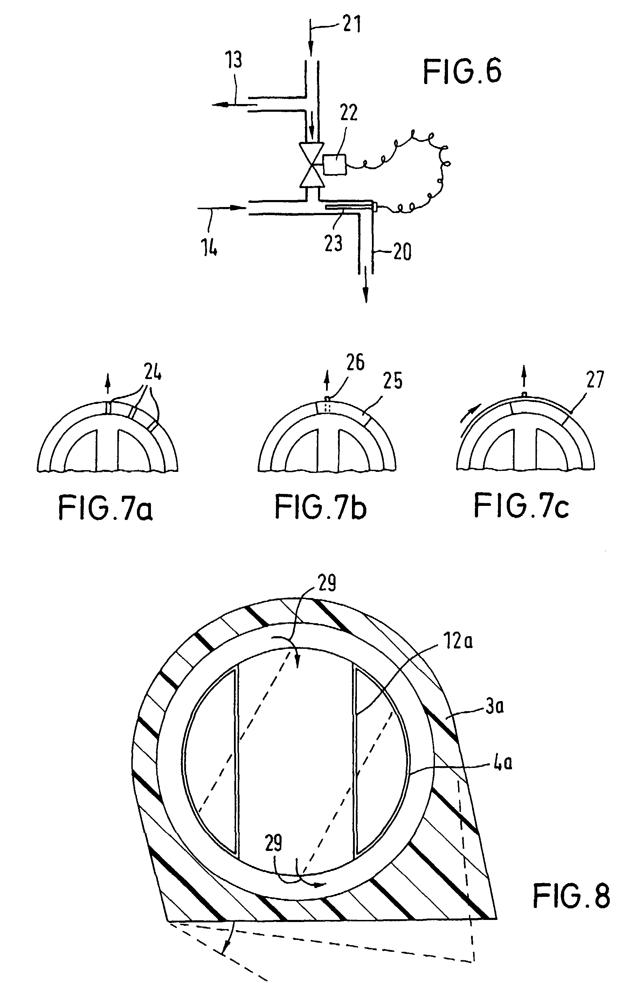

Vorteilhaft kann es sein, wenn, wie dies die Erfindung ebenfalls vorsieht, der oder die Schwerkraftkamine einen solchen Durchmesser aufweisen, daß ein Naturumlauf noch bei der maximalen Schrägstellung (Fig. 8) möglich ist.

Durch diese Kamingestaltung kann, ohne daß besondere Veränderungen vorgenommen werden und beispielsweise ohne daß die Position des Tankes geändert werden muß, eine unterschiedlich schräge Aufstellung vorgenommen werden, was insbesondere bei Umpositionierungen der Vorrichtung von einer Aufstellfläche auf eine andere Vorteile mit sich bringt, der Naturumlauf bleibt dann über eine große Bandbreite der Aufstellschräge gewährleistet.

Um unterschiedlichen Aufstellpositionen auch entlüfungsmäßig gerecht zu werden, sieht die Erfindung entweder am Pumpverhalten eine Mehrzahl von Entlüftungsöffnungen vor, die je nach Aufstellwinkel geöffnet oder geschlossen werden, oder aber verstellbare Entlüftungsschächte.

Weitere Merkmale, Einzelheiten und Vorteile der Erfindung ergeben sich aufgrund der nachfolgenden Beschreibung sowie anhand der Zeichnung. Diese zeigt in
- Fig. 1: die Außenansicht einer erfindungsgemäßen Vorrichtung in moduler Weise in vereinfachter räumlicher Darstellung,
- Fig. 2: das Kollektormodul in vergleichbarer Darstellung in Fig. 1,
- Fig. 3: einen Querschnitt gemäß Linie III-III in Fig. 2 durch das Kollektormodul in vergrößerter Darstellung,
- Fig. 4: eine aufgebrochene, räumliche vergrößerte Darstellung des Isoliergehäuses mit Wärmespeicher,
- Fig. 5: einen Schnitt durch den Wärmespeicher,
- Fig. 6: eine Prinzipskizze eines thermischen Brauchwassermischers,
- Fig. 7a bis 7c: unterschiedliche Gestaltungen von Entlüftungsmöglichkeiten des Primärkreises sowie in
- Fig. 8: eine vereinfachte Schnittdarstellung durch die Vorrichtung im Bereich eines Schwerkraftkamines mit unterschiedlich schrägen Aufstellpositionen bei gegenüber dem Gehäuse gleicher Positionslage des Schwerkraftkamines.

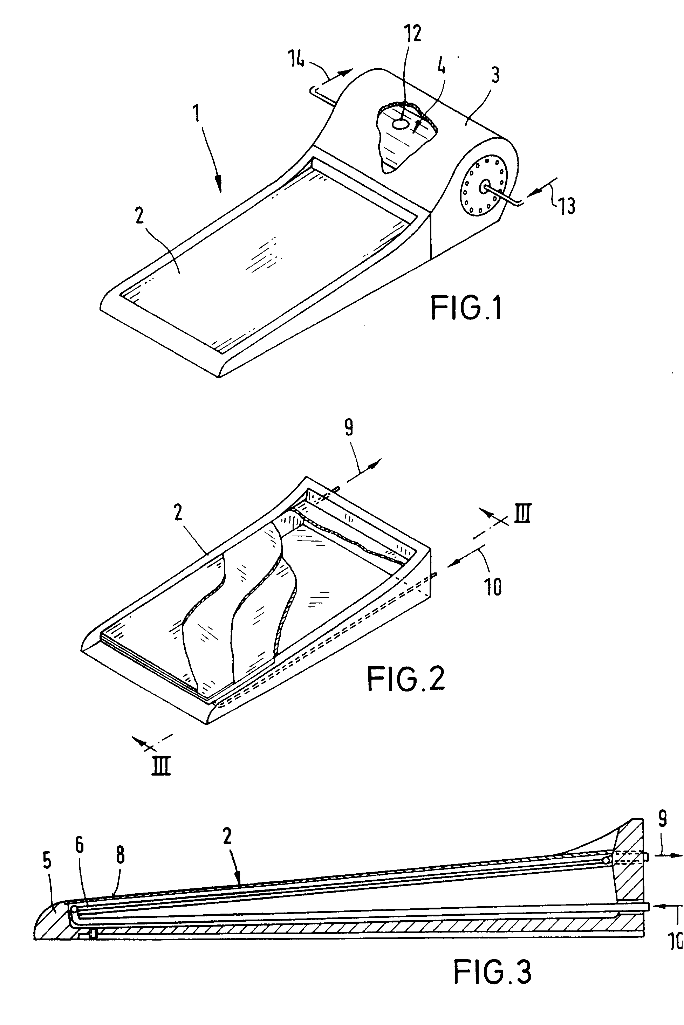

Bezug nehmend auf Fig. 1 wird die allgemein mit 1 bezeichnete Vorrichtung von einem Absorber bzw. Kollektor 2 gebildet, der etwa, wie sich auch aus Fig. 3 ergibt, einen dreieckförmigen Querschnitt aufweist, sowie einem Isoliergehäuse 3, in dessen Inneren ein Wärmespeicher 4 untergebracht ist. Die Elemente der Vorrichtung 1 sind als Module auswechselbar gestaltet.

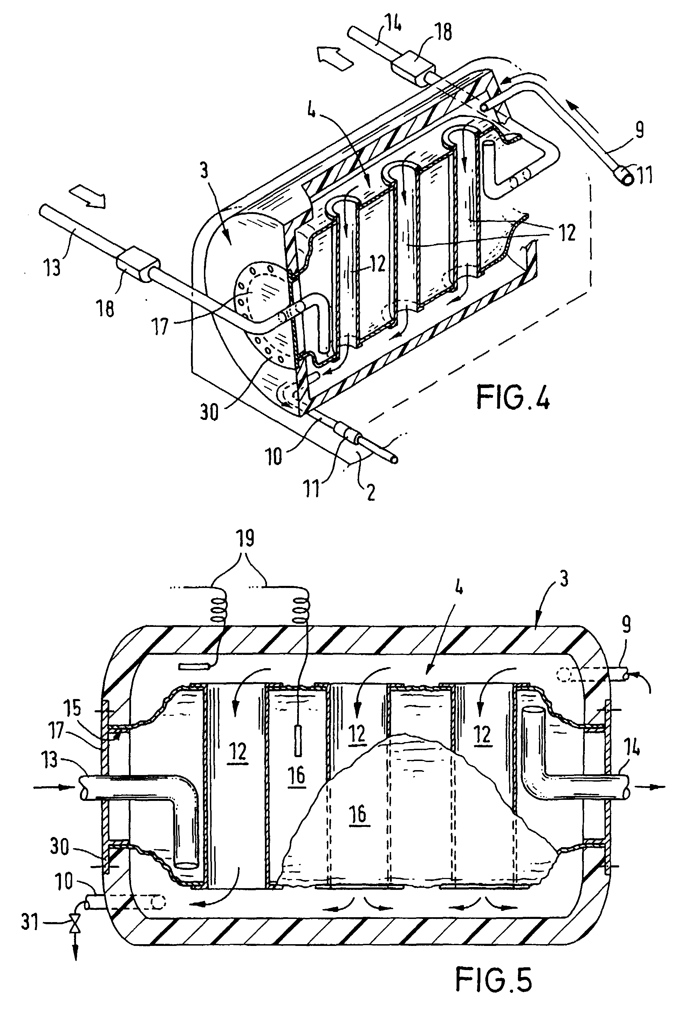

Der Kollektor 2 weist ein Gehäuse 5 auf, einen Absorber 6 sowie eine transparente Abdeckung 8, wobei der Absorber werkseitig bereits eine Schrägstellung aufweist, die einen Naturumlauf ermöglicht. Der Absorber ist an seinem Vorlauf 9 und seinem Rücklauf 10 mit in Fig. 4 lediglich andeutungsweise wiedergegebenen Schnellkupplungen 11 entsprechenden Strömungsleitungen bzw. Strömungsräumen im Isoliergehäuse 3 verbunden, um den Wärmespeicher 4 im Wärmetausch um bzw. durch die über die kaminartigen Durchtrittsrohre 12 zu durchströmen. Der Kaltwasserzulauf zum Wärmespeicher 4 ist in Fig. 1 mit 13 bezeichnet, der Rücklauf des Brauchwassers bzw. Warmwassers mit 14.

In Fig. 5 ist eine Gestaltungsmöglichkeit des Wärmespeichers 4 dargestellt, die darin besteht, daß die über den Primärkreislauf vom Wärmeträgermedium durchströmten kaminartigen Rohre 12 aus einem festen Werkstoff, z.B. Kupfer, gebildet sein können ebenso wie die beispielsweise zur Befestigung bzw. Abdichtung dienenden Flanschbereiche, in Fig. 5 mit 15 bezeichnet, während die übrigen Wandflächen bzw. Wandbereiche des Wärmespeichers 4 aus einem elastischen Werkstoff, z.B. aus einer Gummimembran 16, gebildet sind. Durch diese Gestaltung ist es möglich, etwa bei einem Austausch des Wärmespeichers 4 dieses über die stirnseitigen Flansche 17 vorzunehmen, da der Wärmespeicher entsprechend zusammengefaltet bzw. zusammengelegt werden kann, um einen solchen Austausch zu ermöglichen.

In Fig. 4 ist noch dargestellt, daß über den Flanschbereich 17 der Wärmespeicher 4 in unterschiedlichen Winkelpositionen montierbar ist, um zu gewährleisten, daß die Schwerkraftkamine 12 ihre Funktionsfähigkeit beibehalten, auch wenn die Vorrichtung 1 in Schrägstellung montiert ist.

In den Fig. 4 und 5 sind weitere Steuerungs- bzw. Hilfseinrichtungen lediglich andeutungsweise wiedergegeben. So zeigt die Fig. 4 im Kaltwasserzulauf bzw. im Brauchwasser 13 bzw. im Brauchwasser- bzw. Warmwasserrücklauf 14 andeutungsweise Sicherheitsventile 18, im Kreislauf kann auch ein nicht näher dargestellter Druckausgleichbehälter vorgesehen sein. In Fig. 5 sind Meßorgane, z.B. Sensoren 19, angedeutet, die insbesondere zur Temperaturmessung herangezogen werden können, sie können aber auch der Ermittlung des herrschenden Innendruckes dienen.

Eine Regelung der Abgabetemperatur des Mischwassers ist in Fig. 6 schematisch angedeutet. Hier ist beispielsweise der Mischwasserauslauf mit 20 bezeichnet, der Zulauf von Kaltwasser mit 21, die Leitung zum Speicher mit 13 und die vom Speicher mit 14, wobei ein einstellbares Regelventil 22 vorgesehen ist, welches über ein Kapillarrohr mit Temperaturfühler 23 gesteuert wird, um z.B. zu verhindern, daß zu heißes Wasser dem Mischwasserabfluß 20 zugeführt wird, wenn dieser beispielsweise zum Duschen herangezogen wird. Erkennbar kann diese Regelung völlig drucklos erfolgen, sie ist also bei Niederdruck einsetzbar.

Die Fig. 7a bis 7c zeigen unterschiedliche Möglichkeiten, eine Entlüftung des Primärkreises auch bei unterschiedlichen Aufstellpositionen der Vorrichtung 1 zu gewährleisten. So zeigt die Fig. 7a mehrere Entlüftungsstutzen 24, die entsprechend in ihrer Position dann geöffnet werden, wenn sie den höchsten Punkt des Systemes definieren.

In Fig. 7b ist ein Entlüfungsschacht 25 angedeutet mit einem Entlüftungsrohr 26, welches in dem beispielsweise mit einer Schlitzdichtung versehenen Entlüftungsschacht je nach Aufstellposition verschoben werden kann.

Eine Schiebeentlüftung 27 zeigt schließlich die Fig. 7c, die im Prinzip in ähnlicher Weise wirkt wie die Lösung nach Fig. 7b.

In Fig. 8 ist die Möglichkeit dargestellt, über weite Winkelbereiche auf eine Verstellung der Position des Wärmespeichers 4a innerhalb des Isoliergehäuses 3a zu verzichten, wodurch erreicht wird, daß der entsprechende Schwerkraftkamin 12a vergleichsweise groß ausgebildet ist, so daß er auch noch bei der dort dargestellten, vergleichsweise extremen Schräglage den Naturumlauf gewährleisten kann, was mit den Pfeilen 29 angedeutet ist.

## Patentansprüche

1. Vorrichtung (1) zur Warmwassererzeugung mittels Solarenergie mit einem Warmwasserspeicher (4) in einem Gehäuse (3) und einem querschnittlich etwa dreieckigen Absorber bzw. Kollektor (2) zur Erwärmung eines Wärmeübertragungsmediums in einem Primärkreis, welches über einen Sekundärkreis im Wärmetausch mit dem im Wärmespeicher zu erwärmenden Brauchwasser steht, wobei der Warmwasserspeicher von einer Reihe von kaminartigen, vom Wärmeübertragungsmedium durchströmbaren Durchtrittsrohren durchsetzt ist, die als Schwerkraftkamine in Schwerkraftrichtung einstellbar sind und wobei diese Schwerkraftkamine und Montageflanschbereiche (17) aus einem festen Material, wie Kupfer, bestehen,
dadurch gekennzeichnet,
daß die sonstigen Warmwasserreservoirwände (16) aus einem flexiblen Material, wie Gummi oder Kunststoff, gebildet sind und daß der Absorber (2) bzw. Kollektor, das Isoliergehäuse (3) sowie der darin untergebrachte Wärmespeicher (4) als getrennte, miteinander verbindbare Module ausgebildet sind.

2. Vorrichtung nach Anspruch 1,
dadurch gekennzeichnet,
daß das den Wärmespeicher (4) umgebende Isoliergehäuse (3) mit beidseitigen Flanschringen (30) zur Befestigung des Warmwasserspeichers (4) in der gemäß Einbaulage jeweils gewünschten Position versehen ist.

3. Vorrichtung nach einem der vorangehenden Ansprüche, dadurch gekennzeichnet,
daß sich insbesondere im Sekundärkreis ein Sicherheitsventil (18) und/oder ein Ausgleichgefäß befindet.

4. Vorrichtung nach einem der vorangehenden Ansprüche, dadurch gekennzeichnet,
daß zur Gewinnung von Überdruck im System ein Druckausgleichbehälter mit einer Abnahme des Druckes zu Sekundärzwecken vorgesehen ist.

5. Vorrichtung nach Anspruch 4,
gekennzeichnet durch
eine Druckerhöhungseinrichtung für den Sekundärkreis zur Zurverfügungstellung von Kalt- und Warmwasser unter gleichen Druckbedingungen.

6. Vorrichtung nach einem der vorangehenden Ansprüche,
dadurch gekennzeichnet,
daß im Primärkreis ein schwerkraftgeregeltes Schließorgan (31) zur Verhinderung unbeabsichtigter Abkühlung, z.B. während des Nachtbetriebes, vorgesehen ist.

7. Vorrichtung nach Anspruch 6,
dadurch gekennzeichnet,
daß das schwerkraftgeregelte Schließorgan (31) aus einer Kugel in einem Kugelkäfig aus nicht wärmeleitfähigem Material zur Ausnutzung der Dichteunterschiede der Primärflüssigkeit bei unterschiedlicher Temperatur vorgesehen ist.

8. Vorrichtung nach einem der vorangehenden Ansprüche,
dadurch gekennzeichnet,
daß im Übergangsbereich von Kollektor (2) und Warmwasserspeicher (4) im Primärkreis ein Regelorgan vorgesehen ist zur Einstellung der Temperaturdifferenz zwischen Warmwasserspeicher und Absorber.

9. Vorrichtung nach einem der vorangehenden Ansprüche,
dadurch gekennzeichnet,
daß ein Regelorgan und/oder ein thermischer Brauchwassermischer zur Einhaltung einer vorbestimmbaren Minimaltemperatur und/oder Maximaltemperatur vorgesehen ist, insbesondere im Primärkreislauf mit einem im Warmwasserspeicher (4) installierten Temperaturfühler (19).

10. Vorrichtung nach einem der vorangehenden Ansprüche,
gekennzeichnet durch
einen einstellbaren, druckunabhängigen thermischen Brauchwassermischer (22), insbesondere drucklos betreibbaren thermischen Brauchwassermischer.

11. Vorrichtung nach einem der vorangehenden Ansprüche,
dadurch gekennzeichnet,
daß der oder die Schwerkraftkamine (12) einen solchen Durchmesser aufweisen, daß ein Naturumlauf noch bei der maximalen Schrägstellung (Fig. 8) möglich ist.

12. Vorrichtung nach einem der vorangehenden Ansprüche,
dadurch gekennzeichnet,
daß im Isolationsmantel eine Mehrzahl von die jeweilige Schrägstellung berücksichtigenden Entlüftungsöffnungen (24) vorgesehen sind.

13. Vorrichtung nach einem der vorangehenden Ansprüche,
dadurch gekennzeichnet,
daß ein am Umfang vorgesehener, gedichteter Lüftungsschlitz (25) mit einem in die jeweilig notwendige Lüftungsstellung positionierbaren Entlüftungsrohr und/oder ein entsprechender Schieberentlüfter (27) vorgesehen ist.

## Claims

1. Device (1) for producing hot water by means of solar energy, which device has a hot-water storage tank (4) in a casing (3) and an absorber or collector (2), which is approximately triangular in cross-section, for heating up a heat transfer medium in a primary circuit, which heat transfer medium exchanges heat, via a secondary circuit, with the service water to be heated up in the heat accumulator, the the hot-water storage tank having, passing through it, a series of chimney-like transit tubes through which heat transfer medium flows and which can be set in the direction of gravity as gravity chimneys, and the said gravity chimneys and mounting flange regions (17) consisting of a rigid material such as copper,
characterised in that
the other walls (16) of the hot-water reservoir are formed from a flexible material such as rubber or plastic, and that the absorber (2) or collector, the insulating casing (3) and also the heat accumulator (4) accommodated therein are constructed as separate modules which can be connected to one another.

2. Device according to claim 1,
characterised in that
the insulating casing (3) surrounding the heat accumulator (4) is provided with flange rings (30) on both sides for fastening the hot-water storage tank (4) in the particular position desired, according to the fitting location,

3. Device according to one of the preceding claims,
characterised in that
a safety valve (18) and/or an equalising vessel is/are situated, in particular, in the secondary circuit.

4. Device according to one of the preceding claims,
characterised in that,
for the purpose of extracting excess pressure in the system, a pressure-equalising receptacle having a pressure take-off for secondary purposes is provided.

5. Device according to claim 4,
characterised by
a pressure-increasing arrangement for the secondary circuit for making cold and hot water available under the same pressure conditions.

6. Device according to one of the preceding claims,
characterised in that
a gravity-regulated closing part (31) is provided in the primary circuit for preventing unintentional cooling-down, for example during nocturnal operation.

7. Device according to claim 6,
characterised in that
the gravity-regulated closing part (31) consisting of a ball in a ball cage made of non-thermoconductive material is provided for utilising the differences in density of the primarily liquid at different temperatures.

8. Device according to one of the preceding claims,
characterised in that
a regulating part is provided in the primary circuit in the transitional region between the collector (2) and the hot-water storage tank (4) for setting the temperature difference between the hot-water storage tank and the absorber.

9. Device according to one of the preceding claims,
characterised in that
a regulating part and/or a thermal service-water-mixer for adhering to a predetermined minimum temperature and/or maximum temperature is provided, particularly in the primary circuit having a temperature probe (19) installed in the hot-water storage tank (4).

10. Device according to one of the preceding claims,
characterised by
a settable thermal service-water-mixer (22) which is not pressure-dependent, in particular a thermal service-water-mixer which can be operated without pressure.

11. Device according to one of the preceding claims,
characterised in that
the gravity chimney or chimneys (12) has/have a diameter such that natural circulation is still possible in the position of maximum inclination (figure 8).

12. Device according to one of the preceding claims,
characterised in that
a plurality of ventilating apertures (24), which take account of the particular inclined position, are provided in the insulating jacket.

13. Device according to one of the preceding claims,
characterised in that
a sealed venting slot (25), which is provided on the periphery and has a ventilating tube which can be positioned in the particular venting position required, and/or a corresponding slide ventilator (27), is provided.

## Revendications

1. Dispositif (1) de production d'eau chaude au moyen de l'énergie solaire, comportant un accumulateur de chaleur (4) situé dans un boîtier (3) et un absorbeur ou collecteur (2) de forme approximativement triangulaire en coupe transversale, servant à chauffer un fluide caloporteur situé dans un circuit primaire et réalisant, par l'intermédiaire d'un circuit secondaire, un échange thermique avec l'eau non potable devant être chauffée dans l'accumulateur de chaleur, l'accumulateur d'eau chaude étant traversé par une série de tubes de traversée en forme de cheminée, qui peuvent être parcourus par le fluide caloporteur et sont réglables en tant que cheminées à gravité, dans la direction de la force de pesanteur, et ces cheminées à gravité et des parties formant brides de montage (17) étant réalisées en un matériau rigide tel que du cuivre,
caractérisé en ce
que les autres parois (16) du réservoir d'eau chaude sont réalisées en un matériau flexible tel que du caoutchouc ou une matière plastique et que l'absorbeur (2) ou le collecteur, le boîtier isolant (3) ainsi que l'accumulateur de chaleur (4) logé dans ce boîtier, sont agencés sous la forme de modules séparés, pouvant être raccordés entre eux.

2. Dispositif selon la revendication 1, caractérisé en ce
que le boîtier isolant (3), qui entoure l'accumulateur de chaleur (4), est équipé de brides annulaires (3) situées des deux côtés et servant à fixer l'accumulateur de chaleur (4) dans la position respectivement désirée conformément à la position de montage.

3. Dispositif selon l'une des revendications précédentes, caractérisé en ce
qu'une soupape de sécurité (18) et/ou un récipient de compensation est situé notamment dans le circuit secondaire.

4. Dispositif selon l'une des revendications précédentes, caractérisé en ce
que pour l'obtention d'une surpression dans le système, il est prévu un récipient de compensation de pression avec une prise de pression dans un but secondaire.

5. Dispositif selon la revendication 4, caractérisé par
un dispositif d'accroissement de pression pour le circuit secondaire de manière à délivrer de l'eau froide et de l'eau chaude dans les mêmes conditions de pression.

6. Dispositif selon l'une des revendications précédentes, caractérisé en ce
que dans le circuit primaire est prévu un organe de fermeture (31), qui est réglé en fonction de la force de pesanteur et sert à empêcher un refroidissement intempestif, par exemple pendant le fonctionnement de nuit.

7. Dispositif selon la revendication 6, caractérisé en ce
que l'organe de fermeture (31) réglé en fonction de la force de pesanteur est constitué par une bille qui est prévue dans une cage réalisée en un matériau non thermoconducteur pour l'utilisation des différences de densité du liquide primaire dans le cas où la température varie.

8. Dispositif selon l'une des revendications précédentes, caractérisé en ce
que dans la zone de jonction entre le collecteur (2) et l'accumulateur de chaleur (4) est prévu, dans le circuit primaire, un organe de régulation servant à régler la différence de température entre l'accumulateur de chaleur et l'absorbeur.

9. Dispositif selon l'une des revendications précédentes, caractérisé en ce
qu'il est prévu un organe de régulation et/ou un mélangeur thermique d'eau non potable pour le maintien d'une température minimale et/ou d'une température maximale pouvant être prédéterminées, notamment dans le circuit primaire comportant un capteur de température (19) installé dans l'accumulateur de chaleur (4).

10. Dispositif selon l'une des revendications précédentes, caractérisé par
un mélangeur réglable d'eau non potable (22), qui est indépendant de la pression, notamment un mélangeur typique d'eau non potable, pouvant fonctionner sans pression.

11. Dispositif selon l'une des revendications précédentes, caractérisé en ce
que la ou les cheminées à gravité (12) possèdent un diamètre tel qu'une circulation naturelle est encore possible pour la position oblique maximale (figure 8).

12. Dispositif selon l'une des revendications précédentes, caractérisé en ce
qu'une multiplicité d'ouvertures de désaération (24), qui prennent en compte la position oblique respective, sont prévues dans l'enveloppe isolante.

13. Dispositif selon l'une des revendications précédentes, caractérisé en ce
qu'il est prévu une fente d'aération (25) fermée de façon étanche, prévue sur la périphérie et comportant un tube de désaération qui peut être positionné dans la position d'aération respectivement nécessaire et/ou un dispositif de désaération correspondant à tiroir (27).
